# EUROPEAN PATENT SPECIFICATION

(11) **EP 4 337 069 B1**
(45) Date of publication and mention of the grant of the patent: **02.04.2025**
(21) Application number: 22727990.8
(22) Date of filing: 11.05.2022
(51) Int. Cl.: A47J 27/00, A47J 27/04

(54) **SYSTEM AND METHOD FOR PREPARING A DOSE OF FOOD**
SYSTEM UND VERFAHREN ZUR ZUBEREITUNG EINER NAHRUNGSDOSE
SYSTEME ET PROCEDE DE PREPARATION D'UNE DOSE D'ALIMENT

(30) Priority: 12.05.2021 IT 202100012233
(43) Date of publication of application: 20.03.2024
(73) Proprietor: Pastificio Rana S.p.A., 37057 San Giovanni Lupatoto (Verona) (IT)
(72) Inventor: RANA, Gian Luca, 37057 San Giovanni Lupatoto (VR) (IT)
(74) Representative: Studio Torta S.p.A.
(86) International application number: PCT/IB2022/054385
(87) International publication number: WO 2022/238925

(56) References cited:
- WO-A1-2014/056814
- WO-A1-2016/001881
- WO-A1-2017/006127
- US-A1- 2019 328 170

## Description

### Technical Field of the Invention

The present invention relates to a system and to a method for preparing a dose of food.

In particular, the present invention relates to a system and to a method for preparing a dose of food comprising various ingredients.

### State of the Art

Within the scope of the quick catering industry, it is known to use machines for cooking fresh food and/or for heating precooked food by means of the use of steam.

Patent applications No. WO 2019/207509, No. WO 2020/212909 and No. WO 2020/212207 of the applicant teach how to cook a dose of fresh food contained in a container by means of the supply of hot water and steam in the container containing the dose of food.

Documents WO 2017/006127 and WO 2014/056814 disclose further examples of machines for cooking and/or heating food. WO 2017/006127 discloses a system for preparing a dose of food, the system comprising:
- a first sealed package containing a first ingredient and comprising a tray with a compartment containing the first ingredient, an upper opening delimited by a first rim, and a sealing element of the tray;
- a second sealed package containing a second ingredient; and
- at least one machine configured to supply hot water and steam for cooking and/or heating the first ingredient in accordance with first cooking and/or heating parameters and configured to supply steam for cooking and/or heating the second ingredient in accordance with second cooking and/or heating parameters.

On the one hand, cooking fresh food by means of water and steam requires dosing the steam and the hot water and controlling the dispensing times of the water and of the steam so as to cook the food quickly.

On the other hand, the will to reach high quality levels of the dose of food requires preparing each ingredient according to high quality levels.

The object of the present invention is to provide a system for preparing a dose of food which is able to conciliate the times required by the quick catering and the will to provide doses of food of high quality.

### Subject and Summary of the Invention

According to the present invention, a system for preparing a dose of food according to claim 1 is provided.

In this way, the first and the second ingredients are cooked or heated separately in order to be joined and mixed together when still hot. This mode for preparing food is particularly suitable for preparing pasta dishes where the first ingredient is fresh pasta, whereas the second ingredient is the pasta sauce.

In the quick catering industry, the system can comprise two or more identical machines where at least one machine is used to cook or heat the second ingredient.

Moreover, in this way, the machine and the container form a substantially closed compartment inside which the first ingredient is cooked.

Furthermore, the system comprises a container having an upper opening delimited by a second rim and configured to contain the at least one second package so as to perform the cooking/heating of the second ingredient within the container without opening the second package.

In this way, it is possible to cook or heat the second ingredient in a simple and quick manner.

In particular, the container is configured to cook/heat the second ingredient in a plurality of second packages.

In this way, it is possible to simultaneously cook or heat a plurality of second ingredients within the container.

In particular, the container comprises a cup body; and an insert configured to be housed in the cup body and maintain the second packages at a predetermined position in the cup body.

More specifically, the insert is configured to convey steam to a determined portion of the second packages so as to favor the cooking or the heating of the second ingredients.

In particular, the first and the second rims are equal in shape and size.

In this way, it is possible to couple both the tray and the container to the same machine so as to perform the cooking or the heating of the first and the second ingredients by means of the same machine.

In particular, said machine is configured to dispense steam and hot water independently of each other.

In this way, it is possible to supply steam and hot water into the tray or into the container simultaneously and/or in any sequence.

In particular, the system comprises a plurality of interchangeable dispensers depending on the modes of operation of the machine.

In this way, it is possible to change the dispenser according to the type of food to be cooked or heated and/or according to the recipe to be prepared.

In particular, the machine comprises a first steam supply duct; a second hot water supply duct; and a first connector extending along an axis and integral with the machine in which the first and the second ducts converge; each of the dispensers comprising a respective first sleeve configured to be fitted around the first connector, so as to couple by pressure each dispenser to the first connector.

In particular, the first connector comprises at least one body selectively movable in a radial direction, whereas the first sleeve of each dispenser comprises a compartment suitable for housing said movable body to lock the respective dispenser in position.

In this way, it is possible to snap-couple each dispenser to the first connector in a simple and cost-effective manner.

In particular, the machine comprises a steam evacuation duct; and a second connector integral with the machine and connected in a fluidic manner to the evacuation duct; each dispenser comprising a second sleeve configured to be selectively fitted to the second connector so as to evacuate excess steam from the tray or from the container.

In particular, the system comprises a junction configured to connect in a fluidic manner the first connector and the second connector directly to allow the recirculation of steam and/or hot water from the first connector to the second connector so as to perform the washing of the first and the second connectors.

A further object of the present invention is to provide a method for cooking food according to claim 13 which allows mitigating the drawbacks of the prior art.

In this way, it is possible to cook or heat the first and the second ingredients directly inside the first and the second packages, which are also used for transporting the first and the second ingredients.

### Brief Description of the Drawings

The invention is described hereafter with reference to the accompanying drawings, which illustrate a non-limiting example embodiment thereof, wherein:
- Figure 1 is a front elevation view, with parts removed for clarity and parts in section, of a system for preparing a dose of food object of the present invention in a first operating configuration;
- Figure 2 is a front elevation view, with parts removed for clarity and parts in section, of the system of Figure 1 in a second operating configuration;
- Figure 3 is a perspective view, with parts removed for clarity, of a sealed package, which is part of the system object of the present invention and is configured to contain an ingredient;
- Figure 4 is a plan view, with parts removed for clarity, of a further sealed package, which is part of the system object of the present invention and is configured to contain a further ingredient;
- Figure 5 is a side elevation view, with parts removed for clarity and parts in section, of the system of Figure 1 in the first operating configuration; and
- Figure 6 is a front elevation view, with parts removed for clarity and parts in section, of the system of Figure 1 in a third operating configuration.

### Detailed Description of Preferred Embodiments of the Invention

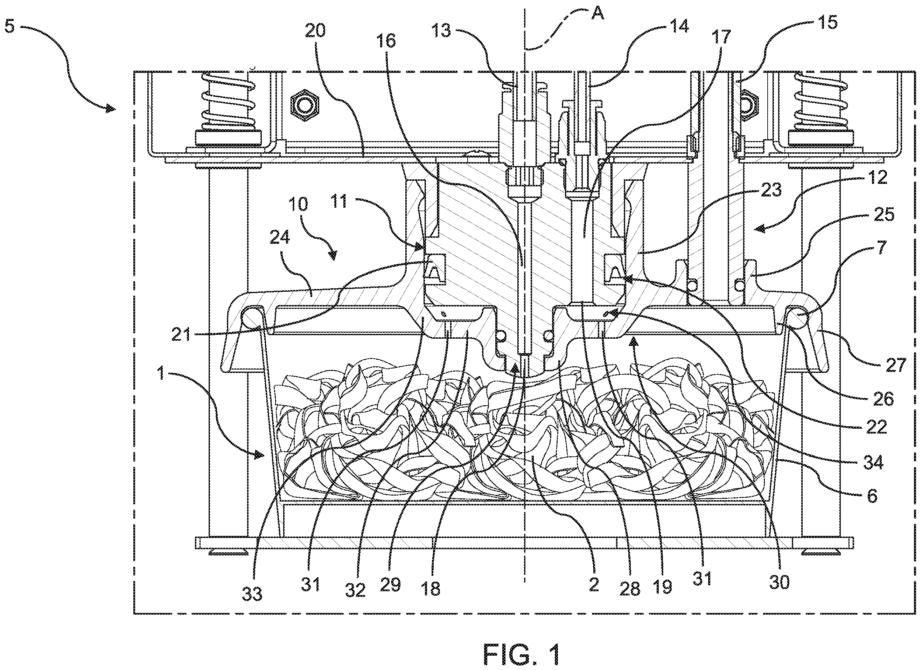

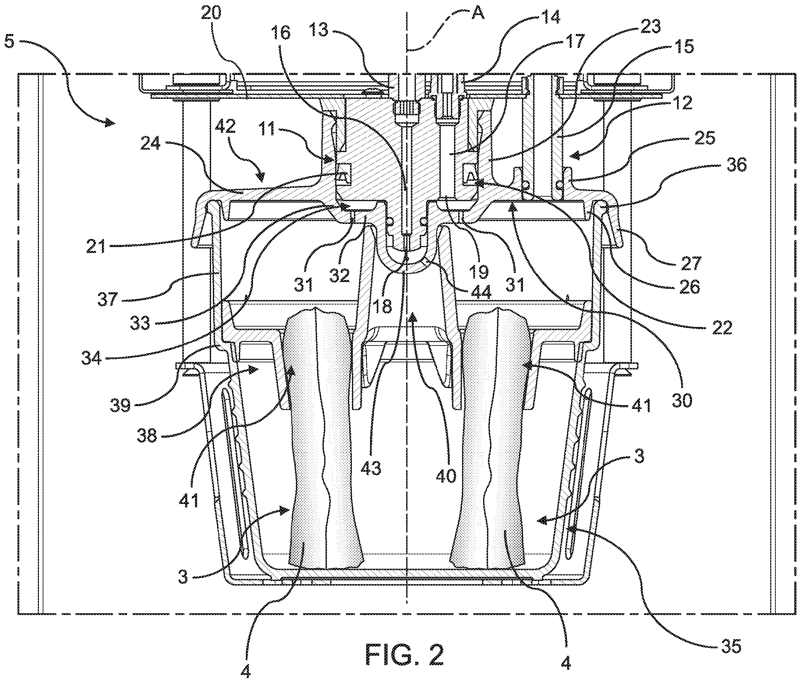

With reference to Figures 1 and 2, a system for preparing a dose of food comprises a sealed package 1 (Figure 1) containing an ingredient 2 (Figure 1), in this case fresh pasta; a sealed package 3 (Figure 2) containing an ingredient 4 (Figure 2), in this case a sauce for the fresh pasta; and a machine 5 configured to directly cook and/or heat the ingredient 2 (Figure 1), in accordance with respective cooking and/or heating parameters and indirectly cook and/or heat the ingredient 4 (Figure 2) in accordance with respective cooking and/or heating parameters.

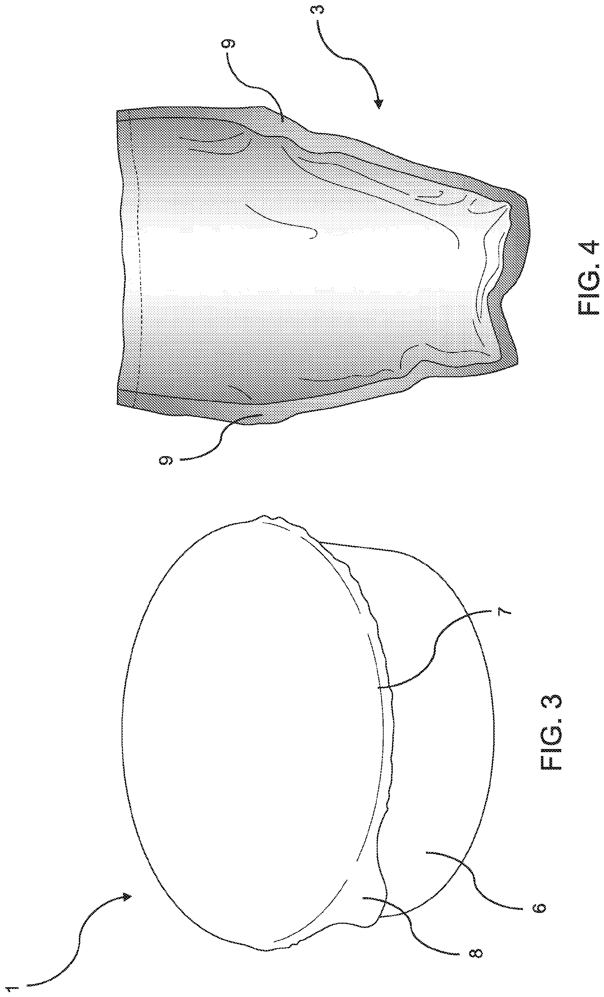

With reference to Figure 3, the sealed package 1 comprises a tray 6 with a compartment containing the ingredient 2; an upper opening delimited by a rim 7; and a sheet 8 sealed at the rim 7 of the tray 6. The tray 6 has the triple function of defining part of the sealed package 1 for transporting the ingredient 2 from the production site to the preparation and consumption site; defining the container in which the cooking of the ingredient 2 is performed; and defining the container in which the dish defined by the combination of the ingredients 2 and 4 suitably mixed will be consumed.

With reference to Figure 4, the sealed package 3 is a bag suitable for containing the ingredient 4 in a pasty or semifluid form with two opposite rims 9, which are at least at sections converging. This configuration of the sealed package 3 draws on the configuration of a "sac à poche" and, once opened at one end where there is a pre-weakened section, it allows expelling the ingredient 4 with the pressure of the hands.

With reference to Figure 1, the machine 5 comprises a dispenser 10 configured to be coupled to the tray 6 at the upper opening of the tray 6 so as to close the compartment inside the tray 6; two connectors 11 and 12, to which selectively coupling the dispenser 10; a duct 13 connected to the connector 11 for supplying steam to the dispenser 10; a duct 14 connected to the connector 11 for supplying hot water to the dispenser 10; and a duct 15 connected to the connector 12 for evacuating steam from the tray 6 to a discharge, not shown in the accompanying figures.

More specifically, the connector 11 comprises a channel 16, which extends along a substantially vertical axis A and is in fluidic communication with the duct 13; and a channel 17, which extends in a direction substantially parallel to the axis A and is in fluidic communication with the duct 14.

The free ends of the channels 16 and 17 are provided with respective openings 18 and 19 configured to supply steam and hot water, respectively. In this way, the machine 5 is configured to dispense steam and hot water independently of each other.

The connector 11 is fixed to a support 20 of the machine 5 and comprises an annular gasket 21 configured to prevent steam or hot water leakage from the dispenser 10. In the case described and illustrated herein, the annular gasket 21 is made of polymeric material and is housed in an annular seat 22 obtained in the connector 11.

The dispenser 10 is preferably made of polymeric material and comprises a cylindrical sleeve 23, which is configured to be fitted on the connector 11; a lid 24 coaxial to the cylindrical sleeve 23; and a further cylindrical sleeve 25 configured to be fitted on the connector 12.

The lid 24 has two annular appendages 26 and 27 which define a compartment configured to house the rim 7 of the tray 6 so as to close the upper opening of the tray 6.

The dispenser 10 further comprises a central protrusion 28, which extends along the axis A and is provided with an opening 29; and an annular wall 30, which extends around the central protrusion 28 and is provided with openings 31 for dispensing hot water. In particular, the annular wall 30 comprises a portion 32, which is substantially perpendicular to the axis A, is adjacent to the central protrusion 28 and has openings 31 extending in a direction substantially parallel to the axis A; and a portion 33, which is inclined with respect to the axis A, is arranged between the portion 32 and the cylindrical sleeve 23 and has openings 31 extending in a direction transverse to the axis A.

The dispenser 10 is configured to be fitted on the connector 11 so that the channel 16 extends at least partially through the opening 29 of the central protrusion 28 and the opening 18 of the channel 16 faces the tray 6 directly.

Furthermore, the dispenser 10 is configured to be fitted on the connector 11 so as to form an annular chamber 34, which is delimited by the annular wall 30 and the connector 11 and is configured to be filled with hot water.

With reference to Figure 2, the system comprises a container 35 having an upper opening delimited by a rim 36 and configured to contain at least one sealed package 3 so as to perform the cooking/heating of the ingredient 4 within the container 35 without opening the sealed package 3. In the case described and illustrated herein, the container 35 is configured to simultaneously cook/heat the ingredient 4 in a plurality of sealed packages 3.

In particular, the container 35 comprises a cup body 37; and an insert 38 configured to be housed in the cup body 37 and maintain the sealed packages 3 at a predetermined position in the cup body 37.

More specifically, the container 35 comprises a shoulder 39 configured to support the insert 38.

The insert 38 is configured to convey steam to a determined portion of the sealed packages 3. In particular, the insert 38 can be selectively removed from the container 35 and comprises a central duct 40 connected in a fluidic manner to the openings 18 and 29 so as to convey steam to the sealed packages 3; and a plurality of housing seats 41, each of which is configured to retain a respective sealed package 3 in a determined position on the bottom of the container 35.

In particular, the rim 7 of the tray 6 and the rim 36 of the container 35 are equal in shape and size. In this way, it is possible to couple both the tray 6 and the container 35 to the same dispenser 10.

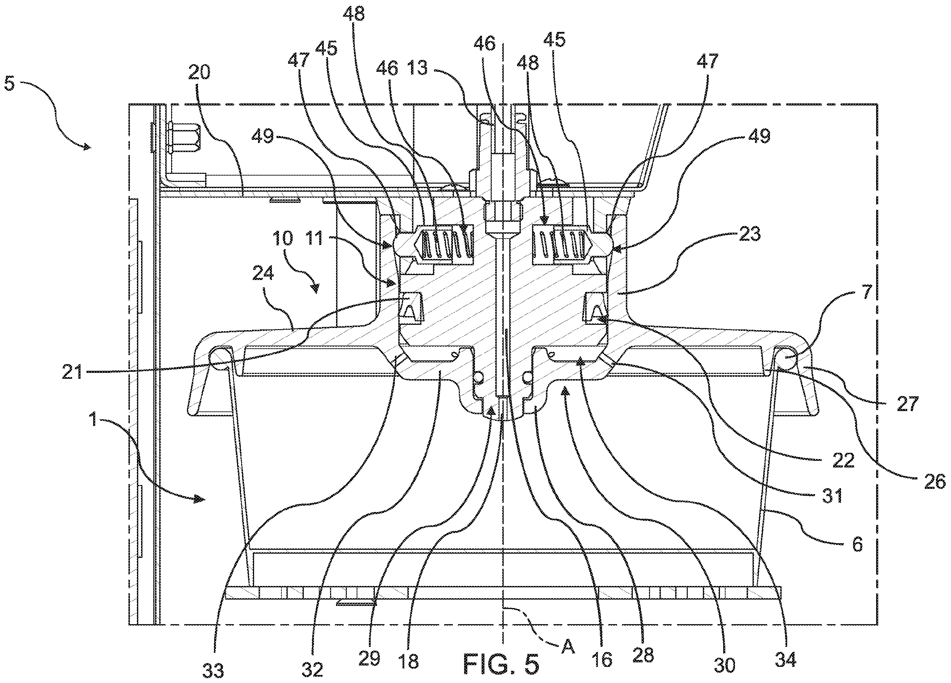

Furthermore, in the case described and illustrated herein, the system comprises a dispenser 42, which differs from the dispenser 10 (Figures 1 and 5) in the shape of the central protrusion 43. In particular, the central protrusion 43 of the dispenser 42 is dome-shaped and has a plurality of openings 44 for dispensing steam, which extend in a direction transverse to the axis A.

The dispenser 42 is configured to be fitted on the connector 11 so that the opening 18 of the channel 16 is arranged inside the central protrusion 43, in proximity to the openings 44.

In accordance with the present invention, the dispensers 10 and 42 are interchangeable depending on the mode of operation of the machine 5. In particular, the dispenser 10 is particularly suitable for cooking or heating solid foods contained within the tray 6 and the dispenser 42 is particularly suitable for cooking or heating liquid foods contained within the tray 6.

With reference to Figure 5, the connector 11 comprises two bodies 45 selectively movable in the radial direction, each of which is housed in a respective seat 46 obtained in the connector 11. Each movable body 45 comprises a rounded end 47 and is movable between an extended position, in which the rounded end 47 protrudes radially from the connector 11, and a retracted position, in which the rounded end 47 is arranged within the respective seat 46.

In particular, the connector 11 comprises two elastic elements 48, in this case coil springs, each of which is coupled to a respective movable body 45. Each elastic element 48 is configured to provide a force to counteract the movement of the respective movable body 45 in the respective seat 46.

The cylindrical sleeve 23 extends around the axis A and comprises a compartment 49 suitable for housing the movable body 45 to lock the dispenser 10 in position. In particular, the compartment 49 is configured to house the rounded end 47 of the movable body 45 so as to snap-couple the dispenser 10 to the connector 11.

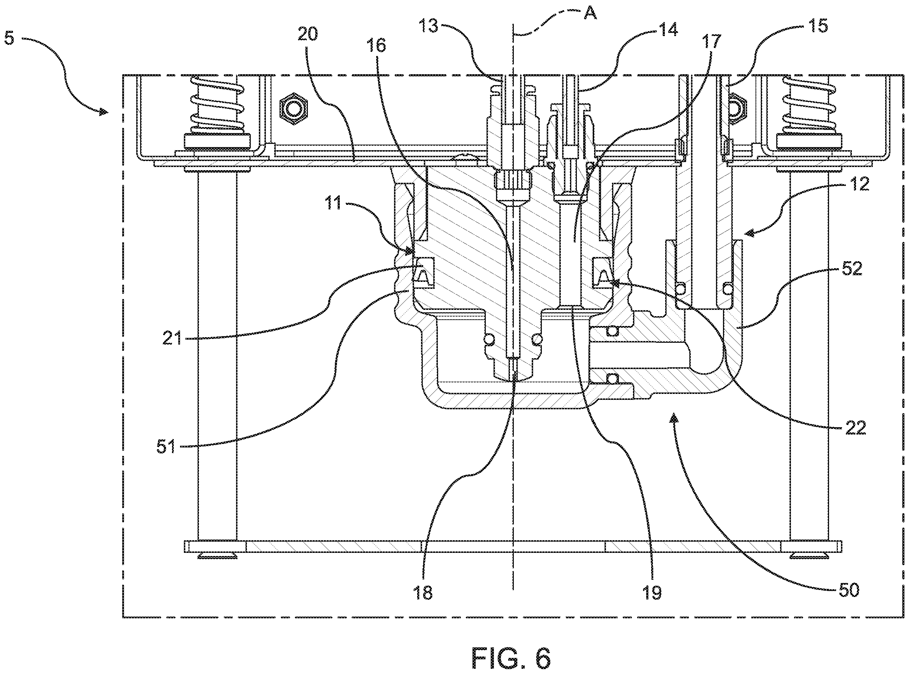

With reference to Figure 6, the system comprises a junction 50 configured to connect in a fluidic manner the connector 11 and the connector 12 directly. In particular, the junction 50 comprises a sleeve 51 configured to be fitted on the connector 11, and an L-shaped duct 52 configured to convey steam or hot water from the sleeve 51 to the connector 12.

In use and with reference to Figure 3, the sheet 8 is removed from the tray 6 and, with reference to Figure 1, the tray 6 is coupled to the dispenser 10 so that the rim 7 is arranged between the annular appendages 26 and 27 to close the upper opening of the tray 6. At this point, steam and hot water are dispensed according to determined cooking and/or heating parameters within the tray 6 respectively from the opening 18 and the openings 31 simultaneously and/or according to any sequence so as to heat or cook the ingredient 2 directly.

With reference to Figure 2, each sealed package 3 is arranged within the container 35, in the respective housing seat 41 of the insert 38. At this point, the steam is dispensed according to determined cooking and/or heating parameters within the container 35 from the openings 44 of the dispenser 42 so as to heat or cook the ingredient 4 indirectly.

With reference to Figure 6, the sleeve 51 is fitted on the connector 11 and the duct 52 is connected to the sleeve 51 on a first end and to the connector 12 on a second end so as to form the junction 50. Subsequently, the machine 5 dispenses hot water from the opening 19. The dispensed hot water is conveyed directly to the connector 12 through the junction 50 so as to be supplied to the discharge, not shown in the accompanying Figures. In this way, it is possible to perform the washing of the connectors 11 and 12.

It is clear that variations may be made to the present invention without thereby departing from the scope of protection of the appended claims.

## Claims

1. A system for preparing a dose of food, the system comprising:
- a first sealed package (1) containing a first ingredient (2) and comprising a tray (6) with a compartment containing the first ingredient (2), an upper opening delimited by a first rim (7), and a sealing element of the tray (6);
- a second sealed package (3) containing a second ingredient (4); and
- at least one machine (5) configured to supply hot water and steam for cooking and/or heating the first ingredient (2) in accordance with first cooking and/or heating parameters and configured to supply steam for cooking and/or heating the second ingredient (4) in accordance with second cooking and/or heating parameters,
the machine (5) and the tray (6) being configured to be coupled to each other at the upper opening of the tray (6) once the sealing element has been removed so as to perform the cooking/heating of the first ingredient (2) in the tray (6) .

2. The system as claimed in Claim 1, and comprising a container (35) having an upper opening delimited by a second rim (36) and configured to contain the at least one second package (3) so as to perform the cooking/heating of the second ingredient (4) within the container (35) without opening the second package (3).

3. The system as claimed in Claim 2, wherein the container (35) is configured to cook/heat the second ingredient (4) in a plurality of second packages (3).

4. The system as claimed in Claim 3, wherein the container (35) comprises a cup body (37); and an insert (38) configured to be housed in the cup body (37) and maintain the second packages (3) at a predetermined position in the cup body (37).

5. The system as claimed in Claim 4, wherein the insert (38) is configured to convey steam to a determined portion of the second packages (3).

6. The system as claimed in Claims 1 and 2, wherein the first and the second rims (7, 36) are equal in shape and size.

7. The system as claimed in any one of the foregoing Claims, wherein said machine (5) is configured to dispense steam and hot water independently of each other.

8. The system as claimed in any one of the foregoing Claims, and comprising a plurality of interchangeable dispensers (10; 42) depending on the modes of operation of the machine (5).

9. The system as claimed in Claim 8, wherein the machine (5) comprises a first steam supply duct (13); a second hot water supply duct (14); and a first connector (11) extending along an axis (A) and integral with the machine (5) in which the first and the second ducts (13, 14) converge; each of the dispensers (10; 42) comprising a respective first sleeve (23) configured to be fitted around the first connector (11).

10. The system as claimed in Claim 9, wherein the first connector (11) comprises at least one body (45) selectively movable in a radial direction; the first sleeve (23) of each of the dispensers (10; 42) comprising a compartment (49) suitable for housing said movable body (45) to lock the respective dispenser (10; 42) in position.

11. The system as claimed in Claim 9 or 10, wherein the machine (5) comprises a steam evacuation duct (15); and a second connector (12) integral with the machine (5) and connected in a fluidic manner to the evacuation duct (15); each dispenser (10; 42) comprising a second sleeve (25) configured to be selectively fitted to the second connector (12).

12. The system as claimed in Claims 9 and 11, and comprising a junction (50) configured to connect in a fluidic manner the first connector (11) and the second connector (12) directly.

13. A method for preparing a dose of food by means of the system as claimed in any one of the foregoing Claims, the method comprising:
- providing the first sealed package (1) containing the first ingredient (2);
- providing the second sealed package (3) containing the second ingredient (4); and
- supplying hot water and steam once the sealing element has been removed to cook and/or heat the first ingredient (2) in accordance with first cooking and/or heating parameters and supplying steam to cook and/or heat the second ingredient (4) in accordance with second cooking and/or heating parameters.

## Patentansprüche

1. System zur Zubereitung einer Portion Lebensmittel, wobei das System Folgendes umfasst:
- eine erste verschlossene Packung (1), die eine erste Zutat (2) enthält und eine Schale (6) mit einer Kammer, die die erste Zutat (2) enthält, eine obere Öffnung, die von einem ersten Rand (7) begrenzt wird, und ein Verschlusselement der Schale (6) umfasst;
- eine zweite verschlossene Packung (3), die eine zweite Zutat (4) enthält; und
- mindestens eine Maschine (5), die so ausgestaltet ist, dass sie Heißwasser und Dampf zum Garen und/oder Erwärmen der ersten Zutat (2) gemäß ersten Gar-und/oder Erwärmungsparametern zuführt, und so ausgestaltet ist, dass sie Dampf zum Garen und/oder Erwärmen der zweiten Zutat (4) gemäß zweiten Gar-und/oder Erwärmungsparametern zuführt,
wobei die Maschine (5) und die Schale (6) so ausgestaltet sind, dass sie an der oberen Öffnung der Schale (6), nachdem das Verschlusselement entfernt wurde, miteinander gekoppelt sind, sodass das Garen/Erwärmen der ersten Zutat (2) in der Schale (6) ausgeführt wird.

2. System nach Anspruch 1, und umfassend einen Behälter (35), der eine obere Öffnung aufweist, die von einem zweiten Rand (36) begrenzt wird, und der so ausgestaltet ist, dass er die mindestens eine zweite Packung (3) enthält, sodass das Garen/Erwärmen der zweiten Zutat (4) innerhalb des Behälters (35) ohne Öffnen der zweiten Packung (3) ausgeführt wird.

3. System nach Anspruch 2, wobei der Behälter (35) so ausgestaltet ist, dass er die zweite Zutat (4) in einer Vielzahl von zweiten Packungen (3) gart/erwärmt.

4. System nach Anspruch 3, wobei der Behälter (35) einen Becherkörper (37) umfasst; und einen Einsatz (38), der so ausgestaltet ist, dass er in dem Becherkörper (37) aufgenommen ist und die zweiten Packungen (3) an einer vorgegebenen Position in dem Becherkörper (37) hält.

5. System nach Anspruch 4, wobei der Einsatz (38) so ausgestaltet ist, dass er Dampf zu einem bestimmten Abschnitt der zweiten Packungen (3) leitet.

6. System nach Anspruch 1 und 2, wobei der erste und der zweite Rand (7, 36) hinsichtlich Form und Größe gleich sind.

7. System nach einem beliebigen der vorhergehenden Ansprüche, wobei die Maschine (5) so ausgestaltet ist, dass sie Dampf und Heißwasser unabhängig voneinander abgibt.

8. System nach einem beliebigen der vorhergehenden Ansprüche, und umfassend eine Vielzahl von in Abhängigkeit von den Betriebsmodi der Maschine (5) auswechselbaren Spendern (10; 42).

9. System nach Anspruch 8, wobei die Maschine (5) einen ersten Dampfzuführungskanal (13); einen zweiten Heißwasserzuführungskanal (14); und ein erstes Verbindungsstück (11), das sich entlang einer Achse (A) erstreckt und einstückig mit der Maschine (5) ausgeführt ist, in dem der erste und der zweite Kanal (13, 14) zusammenlaufen, umfasst; wobei jeder der Spender (10; 42) eine jeweilige erste Hülse (23) umfasst, die zur Anbringung um das erste Verbindungsstück (11) ausgestaltet ist.

10. System nach Anspruch 9, wobei das erste Verbindungsstück (11) mindestens einen Körper (45) umfasst, der selektiv in einer radialen Richtung bewegbar ist; wobei die erste Hülse (23) von jedem der Spender (10; 42) eine Kammer (49) umfasst, die dafür geeignet ist, den bewegbaren Körper (45) aufzunehmen, um den jeweiligen Spender (10; 42) in der Position zu arretieren.

11. System nach Anspruch 9 oder 10, wobei die Maschine (5) einen Dampfabführungskanal (15) umfasst; und ein zweites Verbindungsstück (12), das einstückig mit der Maschine (5) ausgeführt ist und in Fluidverbindung mit dem Dampfabführungskanal (15) steht; wobei jeder Spender (10; 42) eine zweite Hülse (25) umfasst, die zur selektiven Anbringung an dem zweiten Verbindungsstück (12) ausgestaltet ist.

12. System nach Anspruch 9 und 11, und umfassend eine Verbindungsstelle (50) die so ausgestaltet ist, dass sie das erste Verbindungsstück (11) und das zweite Verbindungsstück (12) direkt in Fluidverbindung bringt.

13. Verfahren zur Zubereitung einer Portion Lebensmittel mittels des Systems nach einem beliebigen der vorhergehenden Ansprüche, wobei das Verfahren Folgendes umfasst:
- Bereitstellen der ersten verschlossenen Packung (1), die die erste Zutat (2) enthält;
- Bereitstellen der zweiten verschlossenen Packung (3), die die zweite Zutat (4) enthält; und
- Zuführen von Heißwasser und Dampf, nachdem das Verschlusselement entfernt wurde, um die erste Zutat (2) gemäß ersten Gar- und/oder Erwärmungsparametern zu garen und/oder zu erwärmen, und Zuführen von Dampf, um die zweite Zutat (4) gemäß zweiten Gar- und/oder Erwärmungsparametern zu garen und/oder zu erwärmen.

## Revendications

1. Système de préparation d'une dose d'aliments, le système comprenant :
- un premier emballage scellé (1) contenant un premier ingrédient (2) et comprenant une barquette (6) avec un compartiment contenant le premier ingrédient (2), une ouverture supérieure délimitée par un premier rebord (7), et un élément de scellement de la barquette (6) ;
- un second emballage scellé (3) contenant un second ingrédient (4) ; et
- au moins une machine (5) configurée pour fournir de l'eau chaude et de la vapeur pour cuire et/ou chauffer le premier ingrédient (2) conformément aux premiers paramètres de cuisson et/ou de chauffage et configurée pour fournir de la vapeur pour cuire et/ou chauffer le second ingrédient (4) conformément aux seconds paramètres de cuisson et/ou de chauffage,
la machine (5) et la barquette (6) étant configurées pour être couplées l'une à l'autre au niveau de l'ouverture supérieure de la barquette (6) une fois que l'élément de scellement a été retiré, afin de réaliser la cuisson/le chauffage du premier ingrédient (2) dans la barquette (6).

2. Système selon la revendication 1, comprenant un récipient (35) ayant une ouverture supérieure délimitée par un second rebord (36) et configuré pour contenir l'au moins un second emballage (3) de manière à effectuer la cuisson/le chauffage du second ingrédient (4) à l'intérieur du récipient (35) sans ouvrir le second emballage (3).

3. Système selon la revendication 2, dans lequel le récipient (35) est configuré pour cuire/chauffer le second ingrédient (4) dans une pluralité de seconds emballages (3).

4. Système selon la revendication 3, dans lequel le récipient (35) comprend un corps de gobelet (37) ; et un insert (38) configuré pour être logé dans le corps de gobelet (37) et maintenir les seconds emballages (3) à une position prédéterminée dans le corps de gobelet (37).

5. Système selon la revendication 4, dans lequel l'insert (38) est configuré pour acheminer de la vapeur vers une partie déterminée des seconds emballages (3).

6. Système selon les revendications 1 et 2, dans lequel le premier et le second rebords (7, 36) sont de forme et de taille égales.

7. Système selon l'une quelconque des revendications précédentes, dans lequel ladite machine (5) est configurée pour distribuer de la vapeur et de l'eau chaude indépendamment l'une de l'autre.

8. Système selon l'une quelconque des revendications précédentes, comprenant une pluralité de distributeurs interchangeables (10 ; 42) selon les modes de fonctionnement de la machine (5).

9. Système selon la revendication 8, dans lequel la machine (5) comprend un premier conduit d'alimentation en vapeur (13) ; un second conduit d'alimentation en eau chaude (14) ; et un premier connecteur (11) s'étendant le long d'un axe (A) et faisant partie intégrante de la machine (5) dans lequel le premier et le second conduits (13, 14) convergent ; chacun des distributeurs (10 ; 42) comprenant un premier manchon respectif (23) configuré pour être monté autour du premier connecteur (11).

10. Système selon la revendication 9, dans lequel le premier connecteur (11) comprend au moins un corps (45) sélectivement mobile dans une direction radiale ; le premier manchon (23) de chacun des distributeurs (10 ; 42) comprend un compartiment (49) approprié pour loger ledit corps mobile (45) afin de verrouiller le distributeur respectif (10 ; 42) en position.

11. Système selon la revendication 9 ou 10, dans lequel la machine (5) comprend un conduit d'évacuation de vapeur (15) ; et un second connecteur (12) faisant partie intégrante de la machine (5) et relié de manière fluidique au conduit d'évacuation (15) ; chaque distributeur (10 ; 42) comprenant un second manchon (25) configuré pour être monté sélectivement sur le second connecteur (12).

12. Système selon les revendications 9 et 11, comprenant une jonction (50) configurée pour relier de manière fluidique le premier connecteur (11) et le second connecteur (12) directement.

13. Procédé de préparation d'une dose d'aliment au moyen du système selon l'une quelconque des revendications précédentes, le procédé comprenant :
- la fourniture du premier emballage scellé (1) contenant le premier ingrédient (2) ;
- la fourniture du second emballage scellé (3) contenant le second ingrédient (4) ; et
- la fourniture d'eau chaude et de vapeur une fois que l'élément de scellement a été retiré pour cuire et/ou chauffer le premier ingrédient (2) conformément aux premiers paramètres de cuisson et/ou de chauffage et fournir de la vapeur pour cuire et/ou chauffer le second ingrédient (4) conformément aux seconds paramètres de cuisson et/ou de chauffage.
